# EUROPÄISCHE PATENTSCHRIFT

(11) **EP 0 471 099 B1**
(45) Veröffentlichungstag und Bekanntmachung des Hinweises auf die Patenterteilung: **04.01.1995**
(21) Anmeldenummer: 90115519.2
(22) Anmeldetag: 13.08.1990
(51) Int. Cl.: B23B 29/24, B23B 29/034

(54) **Schneidwerkzeug für die Bearbeitung von Innen- und Aussenkonturen an Werkstücken**
Cutting tool to work internal and external contours of workpieces
Outil de coupe pour le travail des contours intérieurs et extérieurs des pièces

(43) Veröffentlichungstag der Anmeldung: 19.02.1992
(73) Patentinhaber: MAPAL Fabrik für Präzisionswerkzeuge Dr. Kress KG, D-73431 Aalen (DE)
(72) Erfinder: Fees, Heiner, Dipl.-Ing. (BA), D-7120 Bietigheim-Bissingen (DE); Goetz, Manfred, D-8540 Schwabach (DE)
(74) Vertreter: Gleiss, Alf-Olav, Dr.jur. Dipl.-Ing.

(56) Entgegenhaltungen:
- DE-A- 2 140 004
- DE-U- 8 321 950
- US-A- 3 466 955
- US-A- 3 694 879

## Beschreibung

Die Erfindung geht aus von einem Schneidwerkzeug nach der Gattung des Hauptanspruchs.

Bei einem bekannten Schneidwerkzeug (DE-AS 16 02 854), das eine Bohrstange als Werkzeuggrundkörper hat, ist der Schneidplattenträger in einem im Querschnitt rechteckigen Querloch der Bohrstange eingesteckt und durch eine in der Bohrstange drehbar gelagerte Klemmschraube gegen die eine flache Seitenwand des Querlochs gespannt. Zur radialen Einstellung des Schneidplattenträgers ist ein den vom Schneidplattenträger freigelassenen Bereich des Querlochs zentral durchsetzender Gewindebolzen vorgesehen, der in eine Gewindebohrung im Schneidplattenträger eingreift und sich außen am Umfang der Bohrstange über ein Formstück abstützt. Zusätzlich dazu ist noch eine weitere Schraube vorgesehen, die ein Längsverschieben des Gewindebolzens verhindert und den Schneidplattenträger zusätzlich zu dem durch Anziehen der Klemmschraube hervorgerufenen Reibungsschluß gegen den Bearbeitungsdruck abstützt. Diese Ausführung ist nachteilig, weil der Schneidplattenträger nur quer zur Bohrstangenachse verstellt werden kann und sie sich daher für Komplettwerkzeuge zur gleichzeitigen Innen- und Außenrundbearbeitung nicht eignet.

Aus der US-PS 3,466,955 ist ein Schneidwerkzeug bekannt, das als zylindrische Stifte ausgebildete verschiebbar gelagerte Druckstücke aufweist, die durch einen Exzenter gegen eine Stützwand des Werkzeuggrundkörpers gedrückt werden. Hierbei ist nachteilig, daß die zylindrischen Stifte mit ihrer gesamten Stirnfläche an den Stützwänden des Werkzeuggrundkörpers anliegen und somit eine realtiv große Berührungsfläche mit diesen aufweisen. Durch diese große Berührungsfläche kann es bei Maßtoleranzen der Stützwände oder der Druckstücke sehr leicht zu Verkantungen der Stifte kommen, so daß einerseits deren Verspannbarkeit stark beeinträchtigt wird und andererseits keine ausreichende Verdrehsicherheit der Schneidplatte während einer Bearbeitung mit dem Schneidwerkzeug gewährleistet werden kann. Weiterhin ist eine unabhängige Verstellung der Druckstücke nicht möglich, so daß keine exakte Positionierung der Schneidplatte möglich ist.

Der Erfindung liegt die Aufgabe zugrunde, ein Schneidwerkzeug der gattungsgemäßen Art (siehe US-A-3 466 955) zu schaffen, bei dem in einfacher Weise die Schneidplatte in zwei Achsrichtungen einstellbar ist und eine sichere Lagefixierung der Schneidplatte in der einjustierten Position erfolgen kann.

Erfindungsgemäß wird diese Aufgabe durch die im Anspruch 1 angegebenen Merkmale gelöst. Dadurch, daß das Druckstück eine Kugel ist, die durch eine drehbar gelagerte Stellschraube gegen die Stützwand drückbar ist, wobei die Schneidplatte über drei durch je eine Stellschraube verstellbare Kugeln an zwei Stützwänden positioniert und abgestützt ist, ist es sehr vorteilhaft möglich, eine 3-Punkt-Lagerung zu erreichen, mittels der eine exakte Positionierung der Schneidplatte möglich ist. Da sich die Kugeln jeweils nur mit einem Punkt ihrer Umfangsfläche an den Stützwänden des Werkzeuggrundkörpers abstützen, kann eine sehr genaue Justierung erfolgen. Die sich gegenüberliegenden Stützwände und Kugeln berühren sich demnach nur in einem relativ kleinen Flächenbereich, so daß Maßtoleranzen der Stützwände des Werkzeuggrundkörpers und der Druckstücke hinsichtlich einer sehr genauen Positionierung der Schneidplatte vernachlässigbar sind. Dadurch, daß die Kugeln jeweils mit einer drehbar gelagerten Stellschraube gegen die Stützwand drückbar sind, können die Kugeln unabhängig voneinander gegen die Stützwände geführt werden, so daß eine genaue Lagebestimmung der Schneidplatte möglich ist. Ein Positionieren der Schneidplatte ist somit in einer bestimmten wählbaren Position möglich. Durch die Abstützung der Kugeln an zwei Stützwänden, wobei eine Kugel einer ersten Stützwand und zwei Kugeln einer zweiten Stützwand zugeordnet sind, ist ein Verschieben und Positionieren der Schneidplatte in zwei Achsrichtungen sehr genau möglich. Durch die geschaffene genaue Einstellmöglichkeit ist eine sehr präzise und maßhaltige Schneidbearbeitung mit den erfindungsgemäßen Schneidwerkzeugen möglich.

Durch die erfindungsgemäße Ausbildung des Schneidwerkzeugs ist vor allem eine große Auflagefläche der Schneidplatte am Werkzeuggrundkörper und eine gute Zugänglichkeit sowohl zur Schneidplatte als auch zur Spannschraube, was die Handhabung des Werkzeugs beim Auswechseln und Positionieren der Spannplatte bzw. eines Schneidplattenträgers erleichtert. Sehr vorteilhaft kann durch die Zuordnung von drei Druckstücken zu einer Schneidplatte der Winkel und die Planparallelität der Schneidplatte bzw. Wendeschneidplatte eingestellt werden, das heißt, es können Bohrungsdurchmesser, Bohrungslage und Planparallelität nach der Erststückkontrolle nachgestellt werden. Das Schneidwerkzeug zeichnet sich insgesamt durch eine sehr einfache und flache Bauweise aus, die einfach zu handhaben und einzustellen ist. Insbesondere kann eine den Schneidplattenträger übergreifende Wand des Werkzeuggrundkörpers entfallen. Der Schneidplattenträger kann weiterhin sehr vorteilhaft bei gelösten Einstellschrauben und nicht über seinen Umriß hervorstehenden Druckgliedern leicht an zwei im Winkel zueinander stehenden Stützwänden des Werkzeuggrundkörpers angelegt werden.

Weitere vorteilhafte Ausgestaltungen der Erfindung ergeben sich aus den übrigen in den Unteransprüchen genannten Merkmalen.

### Zeichnung

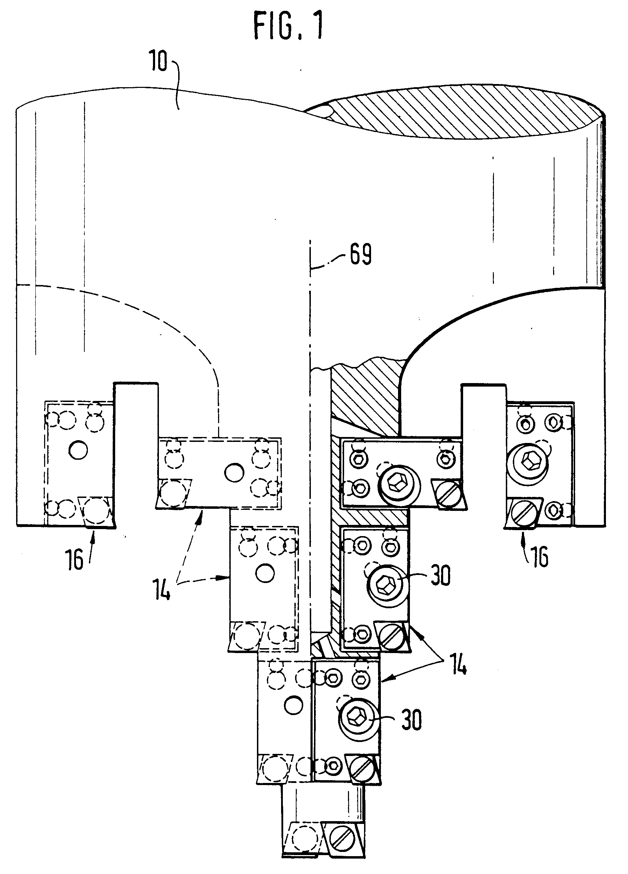

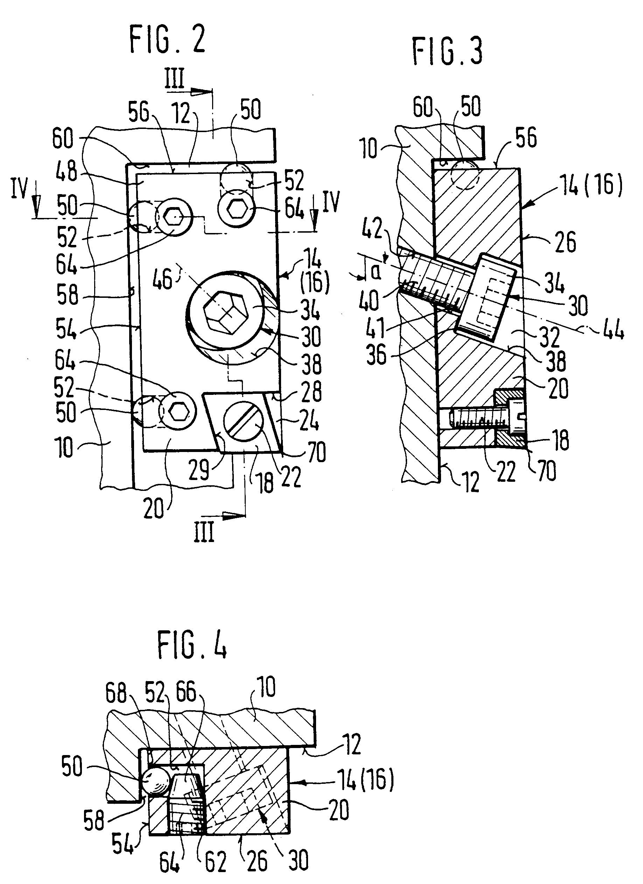

Ein Ausführungsbeispiel der Erfindung ist in der Zeichnung dargestellt und in der nachfolgenden Beschreibung näher erläutert. Es zeigen Figur 1 vergrößert eine Draufsicht auf ein Mehrfachwerkzeug für die Innen- und Außenrundbearbeitung mit mehreren erfindungsgemäß ausgebildeten Schneidplattenträgern, Figur 2 die Draufsicht auf einen Schneidplattenträger mit Schneidplatte und den Nachbarbereich des Werkzeuggrundkörpers in gegenüber Figur 1 weiter vergrößertem Maßstab, Figur 3 einen Schnitt nach der Linie III-III in Figur 2 und Figur 4 einen Schnitt nach der Linie IV-IV in Figur 2.

### Beschreibung des Ausführungsbeispiels

Das Werkzeug hat einen Grundkörper 10, der mit mehreren Auflageflächen 12 (Figur 2) für Kassetten 14 zur Innenrundbearbeitung und prinzipiell gleich aufgebauten Kassetten 16 zur Außenrundbearbeitung versehen ist. Jede Kassette 14, 16 weist eine das eigentliche Schneidelement bildende Schneidplatte 18 aus hochverschleißfestem Werkstoff und einem Plattenträger 20 auf, an welchem die Schneidplatte 18 durch eine Schraube 22 festgespannt ist. Die Schneidplatte 18 sitzt auf einem vertieften Bereich 24 der freien Seitenwand 26 des Plattenträgers 20 auf, der an zwei Wandabschnitten 28, 29 in den nicht vertieften Seitenwandbereich übergeht. Die Wandabschnitte 28, 29 sind in einem dem Umrißprofil der Schneidplatte 18 entsprechenden Winkel zueinander angeordnet und stützen die an ihnen anliegende Schneidplatte 18 gegen Bearbeitungsdruck am Plattenträger 20 ab.

Der Plattenträger 20 ist ein flacher, quaderförmiger Körper, der durch eine Spannschraube 30 gegen die Auflagefläche 12 des Grundkörpers 10 gespannt und an diesem befestigt ist. Die Spannschraube 30 tritt durch eine Bohrung 32 im Plattenträger 20 hindurch und ist mit einem Kopf 34 versehen, der an einer Ringschulter 36 angreift, die am Übergang von einem den Kopf 34 aufnehmenden Bohrungsabschnitt 38 größeren Durchmessers in einen den Gewindeschaft 40 der Schraube 30 aufnehmenden Bohrungsabschnitt 41 kleineren Durchmessers gebildet ist. Die Spannschraube 30 greift unmittelbar in eine Gewindebohrung 42 im Grundkörper 10 ein. Die Achse 44 der Bohrung 32 im Plattenträger 20 und jene der Gewindebohrung 42 im Grundkörper 10 sind in einem Winkel a von etwa 70 Grad zur x- und y-Achse der Auflagefläche 12 am Grundkörper 10 geneigt und liegen in einer Ebene 46 (Figur 2), die durch die Achse 44 und den der Schneidplatte 18 diagonal gegenüberliegenden Eckbereich 48 des Plattenträgers 20 geht.

Zum Justieren des Plattenträgers 20 auf der Auflagefläche 12 des Grundkörpers 10 und Abstützen gegen Bearbeitungsdruck sind drei Kugeln 50 vorgesehen, die in Sackbohrungen 52 verschiebbar gelagert sind, welche an den beiden den Eckbereich 48 begrenzenden Seitenwänden 54, 56 des Plattenträgers 20 ausmünden. Die Auflagefläche 12 des Grundkörpers 10 ist vertieft gegenüber den angrenzenden Oberflächenbereichen des Grundkörpers 10 angeordnet und geht in diese an zwei Stützwänden 58, 60 über, die den Seitenwänden 54, 56 des aufgelegten Plattenträgers 20 gegenüberstehen. In jede Sackbohrung 50 mündet eine im rechten Winkel dazu angeordnete und von der oberen Seitenwand 26 des Plattenträgers 20 ausgehende Gewindebohrung 62 ein, in welche je eine Stellschraube 64 eingedreht ist. Die Stellschrauben 64 sind je mit einem konisch sich verjüngenden Endabschnitt 66 versehen, der in die Sackbohrung 52 eintaucht und ab einer bestimmten Einschraubtiefe der Stellschraube 64 die Kugel 50 über das Umrißprofil des Plattenträgers 20 ein Stück weit herausdrückt. Der Mündungsrand 68 (Figur 4) der Bohrung 52 ist nach dem Einstecken der Kugel 50 so nach innen verformt, daß die Kugel 50 nicht mehr aus der Bohrung 52 herausfallen kann.

Zum Einjustieren der Schneidplatte 18 in mit Bezug auf die Werkzeugachse 69 (Figur 1) radialer und axialer Richtung kann zunächst bei zurückgedrehten Stellschrauben 64 und gelöster Spannschraube 30 der Plattenträger 20 an die beiden Stützwände 58, 60 des Grundkörpers 10 herangeschoben werden, was durch die Schräglage der Bohrungsachse 44 erleichtert wird. Sodann wird die spannschraube 30 leicht angezogen und danach erfolgt das Einjustieren durch mehr oder weniger weites Eindrehen der Stellschrauben 64, wobei die Kugeln 50 den Plattenträger 20 von den Stützwänden 58, 60 des Grundkörpers 10 an den betreffenden Stellen abdrücken und dadurch die Schneidkante 70 der Schneidplatte 18 in die gewünschte Lage bringen. Die Einstellung über die drei Kugeln 50 erfolgt zweckmäßig so, daß alle Kugeln ungefähr den gleichen Traganteil haben, d. h., die endgültige Lage der Schneidkante 70 soll so erreicht werden, daß die Einstellung über alle Stellschrauben 64 möglichst gleichmäßig erfolgt. Durch die Verstellung wird die Vorspannkraft der Spannschraube 30 erhöht, die gegebenenfalls nach dem Einstellen noch etwas stärker angezogen werden muß, um den Plattenträger 20 am Grundkörper 10 fest anzuklemmen.

Um ein Eingraben der Kugeln 50 in die Stützwände 58, 60 des Grundkörpers 10 zu verhindern, können die entsprechenden Bereiche des Grundkörpers 10 beispielsweise nitriert oder auf 60 - 62 HRC einsatzgehärtet sein.

## Patentansprüche

1. Schneidwerkzeug für die Bearbeitung von Innen- und Außenkonturen an Werkstücken mit mindestens einer Schneidplatte (18, 20), die durch eine Spannschraube (30) gegen eine Auflagefläche (12) an einem Werkzeuggrundkörper (10) gespannt ist und einem zum Positionieren der Schneidplatte (18, 20) auf der Auflagefläche (12) und zum zusätzlichen Abstützen gegen Bearbeitungsdruck in der einjustierten Position dienenden, in einer an einer Seitenwand (54, 56) ausmündenden Bohrung (52) verschiebbar gelagertem Druckstück, das mittels eines Stellgliedes gegen eine der Seitenwand (54, 56) gegenüberliegende Stützwand (58, 60) des Werkzeuggrundkörpers (10) drückbar ist, **dadurch gekennzeichnet**, daß das Druckstück eine Kugel (50) ist, die durch eine drehbar gelagerte Stellschraube (64) gegen die Stützwand (58, 60) drückbar ist, wobei die Schneidplatte (18, 20) über drei durch je eine Stellschraube (64) verstellbare Kugeln (50) an zwei Stützwänden (58, 60) positioniert und abgestützt ist.

2. Schneidwerkzeug nach Anspruch 1, dadurch gekennzeichnet, daß die die Stellschraube (64) aufnehmende Gewindebohrung (62) in der Schneidplatte (18, 20) mindestens annähernd im rechten Winkel zu der das Druckglied (50) aufnehmenden Bohrung (52) angeordnet ist und daß die Stellschraube (64) mit einem konisch verjüngten Endabschnitt (66) in diese Bohrung (52) hineinragt.

3. Schneidwerkzeug nach Anspruch 1 oder 2, dadurch gekennzeichnet, daß der äußere Mündungsrand (68) der das Druckglied (50) aufnehmenden Bohrung (52) nach dem Einsetzen des Druckglieds (50) in einem das vollständige Heraustreten des Druckglieds (50) aus der Bohrung (52) verhinderndem Ausmaß nach innen verformt ist.

4. Schneidwerkzeug nach einem der vorhergehenden Ansprüche, dadurch gekennzeichnet, daß die Schneidplatte (18, 20) ein mindestens im wesentlichen quaderförmiger Körper ist, der an einer Ecke mit einer Schneidkante (70) versehen ist und an den beiden an der diagonal gegenüberliegenden Ecke (48) zusammentreffenden Seitenwänden (54, 56) mit Bohrungen (52) zur Aufnahme von Druckgliedern (50) versehen ist, die an zwei im Winkel zueinander stehenden Stützwänden (58, 60) des Werkstückgrundkörpers (10) anliegen.

5. Schneidwerkzeug nach Anspruch 4, dadurch gekennzeichnet, daß die Gewindebohrungen (62) zur Aufnahme der Stellschrauben (64) an der von der Auflagefläche des Werkzeuggrundkörpers (10) abgekehrten Seitenwand (26) der Schneidplatte (18, 20) ausmünden.

6. Schneidwerkzeug nach einem der vorhergehenden Ansprüche, dadurch gekennzeichnet, daß die spannschraube (30) zum Festklemmen der Schneidplatte (18, 20) am Werkzeuggrundkörper (10) durch eine Bohrung (32) in der Schneidplatte (18, 20) hindurchgreift und mit einem Kopf (34) versehen ist, der sich an einer die Bohrung (32) umgebenden Schulter (36) der Schneidplatte (18, 20) abstützt.

7. Schneidwerkzeug nach Anspruch 6, dadurch gekennzeichnet, daß die die Bohrung (32) umgebende Schulter (36) der Schneidplatte (18, 20) am Übergang eines den Kopf (34) der Spannschraube (30) mindestens teilweise aufnehmenden Bohrungsabschnitts (38) größeren Durchmessers in einen den Schaft (40) der spannschraube (30) aufnehmenden Bohrungsabschnitt (41) kleineren Durchmessers gebildet ist.

8. Schneidwerkzeug nach Anspruch 6 oder 7, dadurch gekennzeichnet, daß die Achse (44) der die spannschraube (30) aufnehmenden Bohrung (32) in der Schneidplatte (18, 20) zur x- und y-Achse der Auflagefläche (12) des Werkzeuggrundkörpers (10) geneigt angeordnet ist.

9. Schneidwerkzeug nach Anspruch 8, dadurch gekennzeichnet daß die Achse (44) der die spannschraube (30) aufnehmenden Bohrung (32) in der Schneidplatte (18, 20) in einer Ebene (46) liegt, die durch den der Schneidkante (70) gegenüberliegenden Eckbereich (48) der Schneidplatte (18, 20) geht.

10. Schneidwerkzeug nach einem der vorhergehenden Ansprüche, dadurch gekennzeichnet, daß die Schneidplatte (18, 20) einen mindestens im wesentlichen quaderförmigen Plattenträger (20) hat, der an mindestens einer Stelle seines Umfangs, vorzugsweise an einer Ecke, eine die Schneidkante (70) aufweisende Schneidplatte (18) trägt.

11. Schneidwerkzeug nach einem der Ansprüche 1 bis 9, dadurch gekennzeichnet, daß die Schneidplatte (18, 20) einstückig ausgebildet und vorzugsweise mit mehreren Schneidkanten versehen ist.

## Claims

1. A cutting tool for machining inner and outer contours of workpieces, having at least one cutting plate (18, 20) which is tensioned by means of a tensioning screw (30) against a bearing surface (12) on a tool base body (10), and having a pressure piece which serves to position the cutting plate (18, 20) on the bearing surface (12) and to additionally protect it from machining pressure in the adjusted position and which is displaceably mounted in a bore (52) which opens out at a side wall (54, 56), which pressure piece can be pressed by means of an adjusting element against a supporting wall (58, 60) of the tool base body (10) opposite the side wall (54, 56), characterized in that the pressure piece is a ball (50) which can be pressed against the supporting wall (58, 60) by means of a rotatably mounted adjusting screw (64), wherein the cutting plate (18, 20) is positioned and supported against two supporting walls (58, 60) by way of three balls (50) which can each be adjusted by means of an adjusting screw (64).

2. A cutting tool according to Claim 1, characterized in that the threaded bore (62) in the cutting plate (18, 20) receiving the adjusting screw (64) is arranged at least approximately at a right angle to the bore (52) receiving the pressure element (50), and in that the adjusting screw (64) projects into this bore (52) by a conically tapered end section (66).

3. A cutting tool according to Claim 1 or 2, characterized in that the outer orifice edge (68) of the bore (52) receiving the pressure element (50) after the pressure element (50) has been inserted is inwardly deformed to an extent which prevents the pressure element (50) from coming out of the bore (52) completely.

4. A cutting tool according to one of the preceding claims, characterized in that the cutting plate (18, 20) is an at least substantially cuboidal body which is provided at one corner with a cutting edge (70) and is provided at the two side walls (54, 56) meeting at the diagonally opposing corner (48) with bores (52) for receiving pressure elements (50) which bear against two supporting walls (58, 60) of the workpiece base body (10) which are at an angle to one another.

5. A cutting tool according to Claim 4, characterized in that the threaded bores (62) for receiving the adjusting screws (64) open out at the side wall (26) of the cutting plate (18, 20) remote from the bearing surface of the tool base body (10).

6. A cutting tool according to one of the preceding claims, characterized in that the tensioning screw (30) for securely clamping the cutting plate (18, 20) to the tool base body (10) passes through a bore (32) in the cutting plate (18, 20) and is provided with a head (34) which is supported against a shoulder (36) of the cutting plate (18, 20) surrounding the bore (32).

7. A cutting tool according to Claim 6, characterized in that the shoulder (36) of the cutting plate (18, 20) surrounding the bore (32) is formed at the transition of a bore section (38) of larger diameter at least partially receiving the head (34) of the tensioning screw (30) into a bore section (41) of smaller diameter receiving the shaft (40) of the tensioning screw (30).

8. A cutting tool according to Claim 6 or 7, characterized in that the axis (44) of the bore (32) in the cutting plate (18, 20) receiving the tensioning screw (30) is arranged at an inclination to the x and y axes of the bearing surface (12) of the tool base body (10).

9. A cutting tool according to Claim 8, characterized in that the axis (44) of the bore (32) in the cutting plate (18, 20) receiving the tensioning screw (30) lies in a plane (46) which runs through the corner region (48) of the cutting plate (18, 20) opposite the cutting edge (70).

10. A cutting tool according to one of the preceding claims, characterized in that the cutting plate (18, 20) has an at least substantially cuboidal plate support (20) which at at least one point of its periphery, preferably at a corner, supports a cutting plate (18) having the cutting edge (70).

11. A cutting tool according to one of Claims 1 to 9, characterized in that the cutting plate (18, 20) is constructed in one piece and is preferably provided with a plurality of cutting edges.

## Revendications

1. Outil de coupe pour travailler les contours intérieurs et extérieurs de pièces à usiner, comportant au moins une plaque de coupe (18, 20) qui est serrée par une vis de serrage (30) contre une surface d'appui (12) d'un corps de base d'outil (10) et une pièce de pression montée de manière mobile dans un perçage (52) débouchant sur une paroi latérale (54, 56), qui sert à positionner la plaque de coupe (18, 20) sur la surface d'appui (12) et qui sert également d'appui supplémentaire contre la pression d'usinage dans la position ajustée, pièce de pression qui peut être appuyée au moyen d'un organe de réglage contre une paroi d'appui (58, 60) du corps de base (10) de l'outil qui est opposée à la paroi latérale (54, 56), caractérisé en ce que la pièce de pression est une bille (50) qui peut être appuyée contre la paroi d'appui (58, 60) à l'aide d'une vis de réglage (64) montée de manière rotative, la plaque de coupe (18, 20) étant positionnée et prenant appui sur deux parois d'appui (58, 60) par le biais de trois billes (50) pouvant chacune être déplacée au moyen d'une vis de réglage (64).

2. Outil de coupe selon la revendication 1, caractérisé en ce que le taraudage (62) dans la plaque de coupe (18, 20) qui reçoit la vis de réglage (64) est disposé au moins approximativement en angle droit par rapport au perçage (52) recevant l'élément de pression (50), et en ce que la vis de réglage (64) pénètre dans ce perçage (52) par une partie d'extrémité (66) se rétrécissant de façon conique.

3. Outil de coupe selon la revendication 1 ou 2, caractérisé en ce qu'après avoir inséré l'élément de pression (50), le bord extérieur (68) du perçage (52) recevant l'élément de pression (50) est déformé vers l'intérieur dans une mesure telle qu'il empêche totalement l'élément de pression (50) de sortir du perçage (52).

4. Outil de coupe selon l'une des revendications précédentes, caractérisé en ce que la plaque de coupe (18, 20) est un corps au moins essentiellement en forme de quadrilatère, qui est muni à un coin d'un tranchant (70) et sur les deux parois latérales (54, 56) qui se rejoignent au coin opposé (48) de la diagonale de perçages (52) destinés à recevoir des éléments de pression (50), lesquels sont appliqués contre deux parois d'appui (58, 60) du corps de base (10) de l'outil qui sont disposées en angle droit l'une par rapport à l'autre.

5. Outil de coupe selon la revendication 4, caractérisé en ce que les taraudages (62) destinés à recevoir les vis de réglage (64) débouchent sur la paroi latérale (26) de la plaque de coupe (18, 20) qui est opposée à la surface d'appui du corps de base (10) de l'outil.

6. Outil de coupe selon l'une des revendications précédentes, caractérisé en ce que la vis de serrage (30) destinée à bloquer la plaque de coupe (18, 20) sur le corps de base (10) de l'outil traverse un perçage (32) de la plaque de coupe (18, 20) et est munie d'une tête (34) qui prend appui sur un épaulement (36) de la plaque de coupe (18, 20) entourant le perçage (32).

7. Outil de coupe selon la revendication 6, caractérisé en ce que l'épaulement (36) de la plaque de coupe (18, 20) entourant le perçage (32) est formé à la transition entre une partie de perçage (38) de plus grand diamètre recevant la tête (34) de la vis de serrage (30) et une partie de perçage (41) de diamètre plus petit recevant la tige (40) de la vis de serrage (30).

8. Outil de coupe selon la revendication 6 ou 7, caractérisé en ce que l'axe (44) du perçage (32) de la plaque de coupe (18, 20) recevant la vis de serrage (30) est orienté incliné par rapport aux axes x et y de la surface d'appui (12) du corps de base (10) de l'outil.

9. Outil de coupe selon la revendication 8, caractérisé en ce que l'axe (44) du perçage (32) de la plaque de coupe (18, 20) recevant la vis de serrage (30) se situe dans un plan (46) qui coupe la zone d'angle (48) de la plaque de coupe (18, 20) qui est opposée au tranchant (70).

10. Outil de coupe selon l'une des revendications précédentes, caractérisé en ce que la plaque de coupe (18, 20) comporte un support de plaque (20) au moins essentiellement en forme de quadrilatère, qui porte en au moins un point de son pourtour, de préférence à un coin, une plaque de coupe (18) présentant le tranchant (70).

11. Outil de coupe selon l'une des revendications 1 à 9, caractérisé en ce que la plaque de coupe (18, 20) est réalisée d'un seul tenant et est, de préférence, munie de plusieurs tranchants.
